Europäisches Patentamt

European Patent Office

Office européen des brevets

(19)

(11) Numéro de publication: **0 098 182**
**B1**

(12) # FASCICULE DE BREVET EUROPEEN

(45) Date de publication du fascicule du brevet:
**17.09.86**

(51) Int. Cl.⁴: **B 64 D 15/16**

(21) Numéro de dépôt: **83401112.4**

(22) Date de dépôt: **02.06.83**

(54) **Dispositif pour détecter et empêcher la formation de glace sur des surfaces profilées.**

(30) Priorité: **09.06.82 FR 8210004**

(43) Date de publication de la demande:
**11.01.84 Bulletin 84/2**

(45) Mention de la délivrance du brevet:
**17.09.86 Bulletin 86/38**

(84) Etats contractants désignés:
**DE FR GB**

(56) Documents cités:
**FR - A - 949 863**
**GB - A - 518 463**
**GB - A - 567 970**
**US - A - 2 489 799**
**US - A - 2 876 970**
**US - A - 3 614 038**

(73) Titulaire: **SOCIETE NATIONALE D'ETUDE ET DE
CONSTRUCTION DE MOTEURS D'AVIATION,
"S.N.E.C.M.A.", 2 Boulevard Victor, F-75015 Paris (FR)**

(72) Inventeur: **Cattaneo, Christian Jean, 34, rue de
Soignolles Lissy, F-77550 Moissy Cramayel (FR)**
Inventeur: **Derouet, Patrick Roger Jean, 19, rue de
Melun, F-77111 Soignolles en Brie (FR)**
Inventeur: **Laroche, Michel Claude François, 102 rue de
Strasbourg, F-77350 Le Mee Sur Seine (FR)**

(74) Mandataire: **Moinat, François, S.N.E.C.M.A. Service des
Brevets Boîte Postale 81, F-91003 Evry Cedex (FR)**

## Description

La présente invention a pour objet un dispositif pour détecter et empêcher la formation de glace sur des surfaces profilées.

En particulier, tous les organes d'un avion exposés à l'impact de l'écoulement extérieur sont susceptibles, en conditions givrantes, d'être le siège d'une accumulation rapide de glace. Le figeage de l'eau en surfusion s'amorce à tous les points d'arrêts des profils et gagne de proche en proche et peut former des blocs importants qui déforment les profils aérodynamiques, se détachent brusquement et vont endommager les structures.

Dans l'entrée d'air d'un turboréacteur en particulier, les blocs qui se forment sur la lèvre d'entrée, sur le capot fixe ou tournant ou sur les directrices d'entrée peuvent endommager les aubes ou, lorsqu'ils sont centrifugés par le rotor, les parois internes de la veine.

La présente invention vise notamment à satisfaire deux objectifs, à savoir d'une part, en conditions normales, empêcher le givre de se former, d'autre part, en conditions de givrage sévère, le fractionner et l'éliminer avant qu'il n'atteigne des épaisseurs dangereuses.

On connaît déjà une disposition préventive visant le premier objectif, dans laquelle un liquide de dégivrage est amené par une ouverture sur la surface externe de la structure, par l'intermédiaire d'une chambre dont la paroi externe est poreuse, de manière à permettre une distribution du liquide de dégivrage sur la surface externe. Toutefois, ce dispositif nécessite l'embarquement de liquide antigel ainsi qu'une commande de mise en route actionnée par le pilote.

D'autres dispositions connues utilisent une membrane souple, déformable sous l'action d'une pression pneumatique, pour fractionner la glace susceptible de se former sur le bord avant d'une aile d'avion et l'éliminer avant qu'elle n'atteigne des épaisseurs dangereuses.

Un tel dispositif est en particulier connu par le GB-A-518 463 dans lequel, en outre, lorsque la paroi est dilatée sous l'action de la pression pneumatique, des ouvertures sont dégagées pour laisser échapper un fluide anti-givre.

Toutefois, ces dispositions connues nécessitent, pour leur mise en route, une commande de mise en pression, notamment de la part du pilote, ce qui est le cas dans le dispositif de brevet précité.

Le dispositif selon l'invention est du type comportant une paroi déformable sous l'action d'une pression pneumatique et permet de satisfaire simultanément aux deux objectifs ci-dessus.

En outre, il échappe à la nécessité d'une commande de mise en route car son fonctionnement est entièrement automatique.

Le dispositif pour détecter et empêcher la formation de glace sur des surfaces profilées, selon l'invention, du type comportant une paroi externe déformable sous l'action d'une pression pneumatique, ladite paroi étant fixée sur une structure support rigide creuse formant enceinte principale suivant des lignes de contact étanches délimitant des enceintes élémentaires, chaque enceinte élémentaire comportant au moins un orifice de communication avec l'enceinte principale ménagée dans la structure creuse, est remarquable en ce que ladite paroi est poreuse et en ce que l'enceinte principale est alimentée en permanence par une source de gaz chaud qui traverse ladite paroi en l'absence de givre.

On comprend qu'en conditions normales, l'alimentation en permanence de l'enceinte principale par une source de gaz chaud transpirant par la paroi poreuse qui recouvre la structure à surface profilée, permet d'empêcher la formation du givre. Une telle alimentation, prélevée par exemple sur le flux de sortie d'un compresseur, ne nécessite qu'une faible dépense d'énergie.

Dans le cas de conditions de givrage sévère les pores de la paroi déformable se trouvent obturés par la glace et les enceintes élémentaires, se trouvant ainsi automatiquement mises en pression, se gonflent et se déforment pour fractionner la glace avant qu'elle n'atteigne une épaisseur dangereuse. De plus, lorsque la glace commence à recouvrir l'enveloppe déformable, elle isole celle-ci du flux froid, ce qui provoque son réchauffage et facilite ainsi le détachement de la glace.

La présente invention vise également, à titre de seconde application du moyen général, un dispositif détecteur de la formation de glace. Cette application est intéressante, notamment, en ce qu'elle permet d'automatiser un dispositif classique de dégivrage comportant une commande de déclenchement.

Le dispositif détecteur selon la présente invention est remarquable en ce que la structure support et la membrane déformable sont équipées, en au moins un point de chaque enceinte élémentaire, de moyen électriques dont le déplacement engendre un signal.

L'augmentation de la pression dans l'enceinte principale ou dans une enceinte élémentaire peut fournir aussi un signal de détection.

On comprend l'avantage que peut présenter dans certains cas un tel détecteur placé sur la zone la plus vulnérable au givrage, fonctionnant en permanence avec un prélèvement minimum d'énergie, et susceptible de délivrer un signal de commande à un système de dégivrage commandé, d'un type quelconque.

D'autres particularités de l'invention apparaitront à la lecture de la description qui va suivre et des dessins annexés donnés seulement à titre d'exemple, dans lesquels:

— la figure 1 est une vue en coupe d'une application de l'invention à un capot de turboréacteur d'aviation, par exemple à un capot tournant.

— la figure 2 est une vue de détail agrandie de la paroi déformable poreuse.

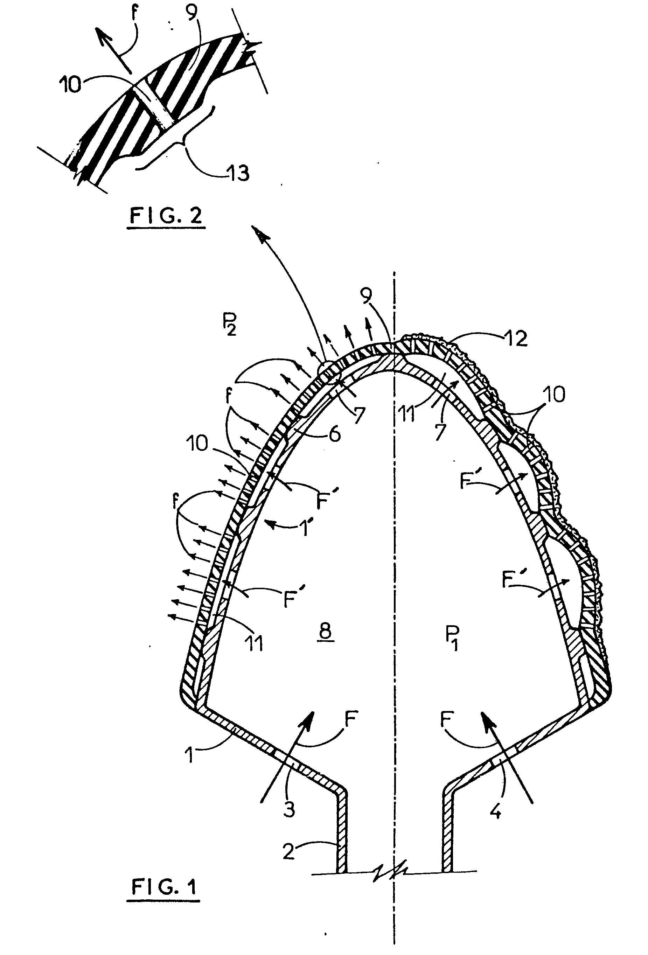

On a représenté sur la figure 1, de manière schématique, un capot tournant 1 de turbomachine en forme d'ogive, formant une structure creuse de révolution et comportant un arbre 2. Cette structure est alimentée en permanence en gaz chaud, suivant les flèches F, par des orifices 3 et 4, raccordés à une source d'air chaud, non représentée, en provenance d'un compresseur par exemple.

Sur la face externe de la partie profilée 1' de la structure 1, sont ménagées des nervures en saillie 6 espacées régulièrement et réparties suivant des lignes parallèles. Les nervures représentées sont de révolution mais d'autres nervures n'apparaissant pas sur la vue en coupe sont également réparties suivant une deuxième famille de lignes parallèles, par exemple, suivant certaines directrices du capot, de manière à former un maillage relativement régulier. Chaque maille comporte au moins un trou 7 de grand diamètre par lequel s'échappe, de manière schématisée par les flèches F', l'air chaud contenu dans l'enceinte 8. Une membrane souple 9, constituée par exemple d'un matériau élastomère, est solidarisée de la partie 1' de la structure support par l'intermédiaire de nervures 6.

La solidarisation de la membrane 9 et de la partie 1' de la structure a été effectuée de manière étanche suivant le tracé des nervures 6 de sorte que celles-ci délimitent des enceintes élémentaires telles que 11, de faible hauteur, recouvrant toute la surface profilée de la structure.

Les nervures délimitant les enceintes élémentaires pourraient être portées par la membrane souple, par exemple venues de moulage lors de la fabrication de la membrane.

Dans une version simplifiée, on pourrait se dispenser des nervures présentées par la surface profilée de la structure, les lignes de contact entre la membrane souple et la structure support étant alors simplement constituées par des traits de colle appliqués en lignes parallèles ou sous forme de quadrillage sur le capot, avant le montage de la membrane.

La membrane souple 9 a été représentée, sur la partie gauche de la figure 1, dans les conditions normales de fonctionnement, l'air s'échappant par les pores de la paroi, et, sur la partie droite de la figure, dans des conditions de givrage sévère, où les pores de la paroi souple se trouvent obturés.

La paroi déformable 9, qui est réalisée par exemple en élastomère ou en un tissu élastique, est percée de trous ou pores 10, de faible diamètre, sur toute sa surface, à l'exception éventuellement des emplacements tels que 6 où elle est solidarisée avec la surface extérieure de la structure.

La pression P1 règnant à l'intérieur de l'enceinte alimentée en permanence en air chaud est supérieure à la pression ambiante P2 règnant dans l'atmosphère. On voit sur la partie gauche de la figure (flèches f) que l'air chaud s'échappe en permanence par les trous ou pores 10 de la membrane 9. La membrane souple externe 9 est ainsi réchauffée en permanence et, dans les conditions normales ce débit d'air suffit à empêcher toute formation de glace.

Sur la partie droite de la figure on a illustré le fonctionnement du dispositif lorsque apparaissent des conditions plus sévères. Le contact de l'air extérieur, chargé d'eau en surfusion, avec la surface de la membrane peut suffire à déclencher un figeage de l'eau, en particulier à tous les points d'arrêt des profils les plus fortement exposés à l'impact. Le givrage gagne alors de proche en proche à une vitesse parfois très rapide. La glace qui se forme sur la partie droite de la figure obture alors les trous ou pores 10 de la membrane souple 9 ce qui a pour effet d'empêcher l'air pénétrant par les orifices 7 de s'échapper. Chaque enceinte élémentaire 11 se trouve alors mise en pression et la partie de la membrane délimitée par les lignes de contact ou nervures 6 se déforme et change alors de courbure. Cette déformation a pour effet de casser la pellicule de glace 12 avant qu'elle n'atteigne une épaisseur dangereuse.

Il est fondamental, pour le bon fonctionnement du dispositif selon l'invention, que la paroi 9 présente à la fois de bonnes caractéristiques de souplesse, de porosité et de longévité. A titre d'exemple, sur la vue agrandie de la figure 2 illustrant le détail (indiqué par un cercle sur la figure 1) d'une coupe partielle de la membrane souple 9, on a représenté des renforts internes 13 venus de moulage prévus à la périphérie de chaque pore 10 pour prévenir une amorce de déchirure à l'endroit des trous ou pores 10 lors de la déformation.

On remarque que le dispositif utilise donc deux actions conjuguées pour combattre le givre, d'une part une action thermique d'un écoulement d'air chaud au travers de la membrane souple et d'autre part une action mécanique liée à la déformation de la membrane souple lorsque les pores de celle-ci se trouvent obstrués par une pellicule de glace.

On remarquera également que la mise en œuvre de cette action mécanique s'effectue de manière automatique sans accessoires compliqués, vannes, capteurs. . .

Dans une application particulière du moyen général ci-dessus décrit, on peut utiliser le dispositif comme détecteur de givrage. Le dispositif peut présenter alors des dimensions plus réduites et être placé sélectivement dans une zone particulièrement vulnérable au givrage. Des moyens détecteurs associés au déplacement de la membrane sont alors prévus pour délivrer un signal lorsque la membrane se déforme.

Dans un premier exemple, un poussoir appuyant élastiquement sur la face interne de la paroi déformable et coulissant à travers une ouverture de la structure fixe peut actionner un contact électrique logé dans un boîtier fixé à l'intérieur de la structure fixe.

Dans un autre exemple, les moyens électriques peuvent être constitués par les armatures d'un condensateur, disposées respectivement sur la structure fixe et sur la paroi déformable à l'intérieur de chaque enceinte élémentaire. La variation de capacité consécutive à un déplacement de la paroi déformable est alors susceptible, par l'intermédiaire d'un circuit oscillant par exemple, d'engendrer un signal.

Le moyen détecteur utilisé pour délivrer un signal peut aussi être constitué par un capteur de pression, du type connu, réglé pour délivrer un signal pour une pression dépassant un seuil prédéterminé (P3 > P1). Un tel capteur peut être placé dans l'enceinte principale, ou bien dans l'une des enceintes élémentaires convenablement choisie.

Le signal délivré par un tel détecteur peut être utilisé pour la commande d'un dispositif de dégivrage de type quelconque, en particulier un dispositif exigeant un apport d'énergie important. On notera que l'alimentation en permanence d'un détecteur, conforme à l'invention, de faible dimension, ne nécessite qu'un très faible apport d'énergie, sans influence notable sur la consommation spécifique d'un moteur d'avion.

## Revendications

1. Dispositif pour détecter et empêcher la formation de glace sur des surfaces profilées, du type comportant une paroi externe déformable sous l'action d'une pression pneumatique, ladite paroi étant fixée sur une structure support rigide creuse (1) formant enceinte principale suivant des lignes de contact étanche (6) délimitant des enceintes élémentaires (11), chaque enceinte élémentaire (11) comportant au moins un orifice de communication (7) avec l'enceinte principale (8) ménagée dans la structure creuse, caractérisé en ce que la paroi (9) est poreuse et l'enceinte principale est alimentée en permanence par une source de gaz chaud, qui traverse ladite paroi en l'absence de givre.

2. Dispositif selon la revendication 1, caractérisé en ce que les lignes de contact sont constituées par des nervures en saillie (6) vers l'extérieur appartenant à la structure support.

3. Dispositif selon la revendication 1, caractérisé en ce que les lignes de contact sont constituées par des nervures en saillie vers l'intérieur appartenant à la membrane déformable.

4. Dispositif selon la revendication 1, caractérisé en ce que les lignes de contact sont constituées par une substance adhésive.

5. Dispositif selon l'une quelconque des revendications 1 à 4, caractérisé en ce que les lignes de contact sont réparties suivant des lignes parallèles.

6. Dispositif selon la revendication 5, caractérisé en ce que les lignes de contact sont disposées de manière à former un maillage.

7. Dispositif pour détecter la formation de glace selon la revendication 1, caractérisé en ce que la structure support et la membrane déformable sont équipées en au moins un point de chaque enceinte élémentaire (11) de moyens électriques dont le déplacement engendre un signal.

8. Dispositif pour détecter la formation de glace selon la revendication 1, caractérisé en ce qu'au moins l'une des enceintes est équipée d'un capteur de surpression qui engendre un signal.

## Patentansprüche

1. Vorrichtung zum Erfassen und zur Verhinderung von Eisbildung an Profilflächen mit einer unter der Wirkung eines pneumatischen Drucks verformbaren äusseren Wandung, die auf einer starren, eine Hauptkammer bildenden, hohlen Tragstruktur (1) längs Linien (6) dichten Kontakts fixiert ist, die Elementarkammern (11) begrenzen, wobei jede dieser Elementarkammern (11) wenigstens eine in der genannten hohlen Tragstruktur ausgebildete Öffnung (7) umfasst, über die sie mit der Hauptkammer in Verbindung steht, dadurch gekennzeichnet, dass die genannte Wandung (9) porös ist und dass die Hauptkammer permanent von einer Quelle heissen Gases gespeist ist, das die Wandung durchdringt, wenn keine Eisbildung vorhanden ist.

2. Vorrichtung nach Anspruch 1, dadurch gekennzeichnet, dass die Linien dichten Kontakts von nach aussen vorstehenden Rippen (6) der Tragstruktur gebildet sind.

3. Vorrichtung nach Anspruch 1, dadurch gekennzeichnet, dass Linien dichten Kontakts von nach innen vorstehenden Rippen der verformbaren Wandung gebildet sind.

4. Vorrichtung nach Anspruch 1, dadurch gekennzeichnet, dass die Linien dichten Kontakts von einer haftenden Substanz gebildet sind.

5. Vorrichtung nach einem der Ansprüche 1 bis 4, dadurch gekennzeichnet, dass die Linien dichten Kontakts parallel verlaufen.

6. Vorrichtung nach Anspruch 5, dadurch gekennzeichnet, dass die Linien dichten Kontakts netzartig angeordnet sind.

7. Vorrichtung zur Erfassung der Eisbildung nach Anspruch 1, dadurch gekennzeichnet, dass die Tragstruktur und die verformbare Wandung in wenigstens einem Punkt jeder Elementarkammer (11) mit elektrischen Mitteln ausgestattet sind, deren Bewegung ein Signal erzeugt.

8. Vorrichtung zur Erfassung der Eisbildung nach Anspruch 1, dadurch gekennzeichnet, dass wenigstens eine der Kammern mit einem ein Signal erzeugenden Überdrucksensor ausgestattet ist.

## Claims

1. Device for detecting and preventing the formation of ice on profiled surfaces, of the type comprising an external wall deformable under the action of pneumatic pressure, the said wall being mounted on a rigid, hollow support structure (1) forming a main enclosure along lines of fluidtight contact (6) defining elementary enclosures (11), each elementary enclosure (11) comprising at least one communication orifice (7) with the main enclosure (8) provided in the hollow structure, characterized in this that the wall (9) is porous and the main enclosure is supplied continuously from a source of hot gas, which passes through the said wall in the absence of frost.

2. Device according to claim 1 characterized in this that the lines of contact are constituted by outwardly projecting ribs (6) forming parts of the support structure.

3. Device according to claim 1 characterized in that the lines of contact are constituted by internally projecting ribs forming parts of the deformable membrane.

4. Device according to claim 1 characterized in this that the lines of contact are constituted by an adhesive substance.

5. Device according to any one of claims 1 to 4 characterized in this that the lines of contact are distributed as parallel lines.

6. Device according to claim 5 characterized in that the lines of contact are disposed in such a manner as to form a grid.

7. Device for detecting the formation of ice according to claim 1, characterized in this that the support structure and the deformable membrane are equipped at at least one point of each elementary enclosure (11) with electrical means of which the displacement generates a signal.

8. Device for detecting the formation of ice according to claim 1, characterized in this that at least one of the enclosures is equipped with an excess pressure sensor which gives rise to a signal.

FIG. 2

FIG. 1

7